# EUROPEAN PATENT APPLICATION

(11) **EP 4 592 024 A1**
(43) Date of publication of application: **30.07.2025**
(21) Application number: 25154045.6
(22) Date of filing: 27.01.2025
(51) Int. Cl.: B23Q 3/155, B23Q 3/157

(54) **MACHINE FOR MACHINING PARTS AND UNITS FOR REPLACING WORKING TOOLS**

(30) Priority: 29.01.2024 IT 202400001698
(71) Applicant: SCM Group S.p.A., 47921 Rimini (RN) (IT)
(72) Inventor: BIANCHI, Fabio, 47921 RIMINI (RN) (IT)
(74) Representative: Tiburzi, Andrea

(57) **Abstract**

The present invention concerns a machine (M) for machining pieces (P), in particular pieces made of wood, glass, fiberglass, ceramic, plastic, metal, or the like, comprising a machining unit (3) for machining a piece (P), using a first tool (31),a tool magazine, for housing at least one second machining tool (32), a tool change unit (S), for picking up and releasing said first (31) or second (32) tool for changing the tool of said machining unit (3), wherein said tool change unit (S) in turn comprises a support frame (5), a closed guide (50) arranged on the perimeter of said support frame (5) with which it is slidably coupled, at least one clamp (4) for gripping and releasing a tool (31, 32), coupled to said closed guide (50), wherein said at least one gripping and releasing clamp (4) comprises a grasping and releasing member (6, 6ᵢ), wherein, when said at least one clamp (4) takes said first (31) or second (32) tool, said gripping and releasing member (6, 6ᵢ) couples with a lateral surface respectively of said first (31) or second (32) tool by means of shape coupling so that the tool coupled to said gripping and releasing member (6, 6ᵢ) is arranged along a substantially vertical main axis (Y), wherein said gripping and releasing member (6, 6ᵢ) has at least one shaping (621) to grip said first (31) or second (32) tool, so as to limit its inclination with respect to said axis (Y) during the movement of said clamp (4) along said closed guide (50). The present invention also concerns a tool change unit (S) for said machine (M).

## Description

The present invention concerns a machine for machining pieces made of wood, glass, fiberglass, and the like, and a unit for replacing working tools of a machine for machining pieces.

### Field of invention

More in detail, the invention concerns a machining center, designed and realized in particular to be equipped with chain-type tool magazines, but which can be used for any machine having a plurality of tools, whose replacement in a controlled manner is necessary.

In the following, the description will be aimed at the machining center equipped with a chain-type magazine, but it is clear that it should not be considered limited to this specific use.

### Prior art

As is well known, machining centers, and in general machines for machining pieces equipped with a plurality of tools, use tool storage magazines, from which they take a subset of tools suitable for the specific working of the piece to be worked.

It is also known the use of rotary devices, for example, chain devices for replacing the tool used for machining the piece by means of the machine for machining the piece itself.

Usually, said rotary devices are equipped with clamps for gripping a working tool to replace the tool used during the previous working made by the machine.

As is known, these rotary devices must respond to the increasingly stringent need to reduce spaces in order to provide compact machines. It follows that these rotary devices often have very narrow bending angles and very small spaces between consecutive clamps used to grip the working tools.

Currently, clamps produced in metallic material are present on the market. These clamps have a high cost and require expensive production times.

There are also clamps made of plastic material to be used for the tool change.

Although clamps made of plastic material reduce the cost and production time compared to clamps made of metal material, said clamps made of plastic material entail operational disadvantages.

In particular, the presence of a plurality of clamps made of plastic material significantly reduces the rotation speed of the rotary devices used for changing the tools.

In fact, for high rotation speeds, for example for speeds comparable to that achievable in tool change systems equipped with metal clamps, a "corkscrew effect" is created, which would make tool change unfeasible.

In particular, these clamps grip the tool near an upper end of the tool.

Therefore, when the clamp grips the tool and rotates, since the instantaneous peripheral speed of the tool is greater than the instantaneous speed at the contact point between the clamp and the tool, the end of the tool free from contact tends to distance itself from the vertical axis passing through the contact area between the upper end of the tool and the clamp. In other words, in rest conditions the main axis of symmetry of the tool is a substantially vertical axis, while at high rotation speeds the axis of symmetry of the tool tilts due to the instantaneous speed difference between the upper end of the tool, in contact with the clamp, and the lower end, which is not constrained.

In fact, since the instantaneous velocity increases as the distance from the center of rotation increases and the two ends have the same angular velocity, the instantaneous velocity of the lower end is greater than the instantaneous velocity of the upper end.

In this way, if the rotation speed of the tool change devices were not reduced, the tools would collide, causing damage to the individual tool or to the entire tool change device.

It seems clear that reducing the rotation speed implies inefficient operation of the machining centers, with cumulative slowdowns for each tool change.

It is also apparent the need to replace rotary devices equipped with metal clamps in such a way as to significantly reduce the production costs of machining centers, tool magazines and tool change devices equipped with several dozen clamps.

### Scope of the invention

In light of the above, it is, therefore, scope of the present invention to increase the rotation speed of the chain without altering the position of a tool transported by said chain.

A further scope of the present invention is to reduce the cost of a machining center equipped with a plurality of tools and clamps, to support said plurality of tools through the use of clamps made of plastic material.

Another scope of the present invention is to increase the mechanical properties of a clamp made of plastic material to reduce the so-called corkscrew effect, which occurs in machining centers equipped with a high-speed rotating magazine.

### Object of the invention

These and other results are obtained according to the invention with a machine for machining pieces equipped with a tool change unit capable of quickly replacing the tool machining the piece by means of gripping members that ensure safe operation, i.e. preventing the tools from deviating from their desired position during the rotation of the tool change unit, and whose production is advantageous economically and in terms of time required.

It is, therefore, specific object of the present invention a machine for machining pieces, in particular pieces made of wood, glass, fiberglass, ceramic, plastic, metal, or the like, comprising a machining unit for machining a piece, using a first tool, a tool magazine, for housing at least one second machining tool, a tool change unit, for picking up and releasing said first or second tool for changing the tool of said machining unit, wherein said tool change unit in turn comprises: a support frame; a closed guide arranged on the perimeter of said support frame with which it is slidably coupled; at least one clamp for gripping and releasing a tool, coupled to said closed guide, wherein said at least one gripping and releasing clamp comprises a grasping and releasing member, wherein, when said at least one clamp takes said first or second tool, said gripping and releasing member couples with a lateral surface respectively of said first or second tool by means of shape coupling so that the tool coupled to said gripping and releasing member is arranged along a substantially vertical main axis, wherein said machine is characterized in that said gripping and releasing member has at least one shaping to grip said first or second tool, so as to limit its inclination with respect to said axis during the movement of said clamp along said closed guide.

Always according to the invention, said gripping and releasing member can comprise a main relief for shape coupling with said lateral surface of said tool.

Still according to the invention, said shaping can comprise two lips capable of contacting said tool.

Advantageously according to the invention, said shaping can comprise one or more reinforcing reliefs arranged on a lateral contact surface of said gripping and releasing member to increase the area in contact with said tool.

Further according to the invention, each reinforcing relief may be arranged along a direction orthogonal to said vertical axis at a distance from said main relief, and wherein said distance from said main relief is the same for each reinforcing relief.

Preferably according to the invention, said main relief and said one or more reinforcing reliefs can form a first cavity and a second cavity to increase the area of contact with said lateral surface of said tool by shape-fit coupling.

Always according to the invention, said tool change unit can comprise a plurality of gripping and releasing members.

Still according to the invention, said gripping and releasing member can be made of plastic material.

Advantageously according to the invention, said plastic material can be filled with fiberglass.

Further according to the invention, said closed guide can comprise a rotating plate, an oval chain, a rectangular chain, or a circular chain for rotating said at least one gripping and releasing clamp around said support frame.

A further object of the present invention is a tool change unit for picking up and releasing tools for a machine comprising a machining unit for working, using a first tool, pieces preferably made of in wood, glass, fiberglass, ceramic, plastic, metal, or the like, and a tool magazine for housing at least a second tool, wherein said tool change unit for changing the tool of said machining unit comprises: a support frame; a closed guide arranged on the perimeter of said support frame, with which it is slidably coupled; at least one clamp for gripping and releasing a tool, coupled to said closed guide, wherein said at least one gripping and releasing clamp comprises a gripping and releasing member wherein, when said at least one clamp takes said first or second tool, said gripping and releasing member couples with a lateral surface respectively of said first or second tool by shape coupling, so that the tool coupled to said gripping and releasing member is arranged along a substantially vertical main axis, wherein said tool change unit is characterized in that said gripping and releasing member has at least one shaping to grip said first or second tool, so as to limit its inclination with respect to said axis during the movement of said clamp along said closed guide.

Always according to the invention, said gripping and releasing member can comprise a main relief for shape coupling with said lateral surface of said tool.

Still according to the invention, said shaping can comprise two lips capable of contacting said tool.

Advantageously according to the invention, said shaping can comprise one or more reinforcing reliefs arranged on a lateral contact surface of said gripping and releasing member to contact said tool.

Preferably according to the invention, each reinforcing relief can be arranged along a direction orthogonal to said vertical axis at a distance from said main relief, wherein said distance from said main relief is the same for each reinforcing relief.

Still according to the invention, said closed guide can comprise a rotating plate, an oval chain, a rectangular chain, or a circular chain for rotating said at least one gripping and releasing clamp around said support frame.

Advantageously according to the invention, said tool change unit can comprise a plurality of gripping and releasing members.

### Brief description of the figures

The present invention will be now described, for illustrative but not limitative purposes, according to its preferred embodiments, with particular reference to the figures of the enclosed drawings, wherein:
figure 1 shows a machine equipped with a tool change unit, object of the present invention;
figure 2 shows a tool change unit which is the object of the present invention;
figure 3 shows an upper perspective view of a tool gripping and releasing member, with which the tool change unit, object of the present invention, is equipped;
figure 4 shows a lower perspective view of a tool gripping and releasing member, with which the tool change unit, object of the present invention, is equipped;
figure 5 shows a perspective view of a plurality of tools, to which each gripping and releasing member of the present invention can anchor and/or release;
figure 6A shows a side view of a tools change device, present in the prior art;
figure 6B shows a side view of a section of a prior art clamp attached to a tool;
figure 6C shows a side view of the device of figure 6A, in rotation in which a tool in contact with a clamp of said known device tilts due to the rotation of said device;
figure 7 shows a lower perspective view of a tool change device equipped with a clamp for gripping a tool, present in the prior art;
figure 8A shows a side view of a tool change unit, object of the present invention, in which a gripping and releasing member connects to a tool;
figure 8B shows a side view of a section of the gripping and releasing member anchored to a tool of figure 8A;
figure 9 shows a top perspective view of the tool change unit of figure 8A, in rotation;
figure 10 shows a lower perspective view of the unit of figure 9, in rotation;
figure 11 shows a lower perspective view of a rotating plate, with which the tool change unit of the present invention is equipped;
figure 12 shows a top view of an oval chain, with which the tool change unit of the present invention is equipped; and
figure 13 shows a top view of an embodiment of a rectangular chain, with which the tool change unit of the present invention is equipped.

### Detailed description

In the various figures, similar parts will be indicated with the same numerical references.

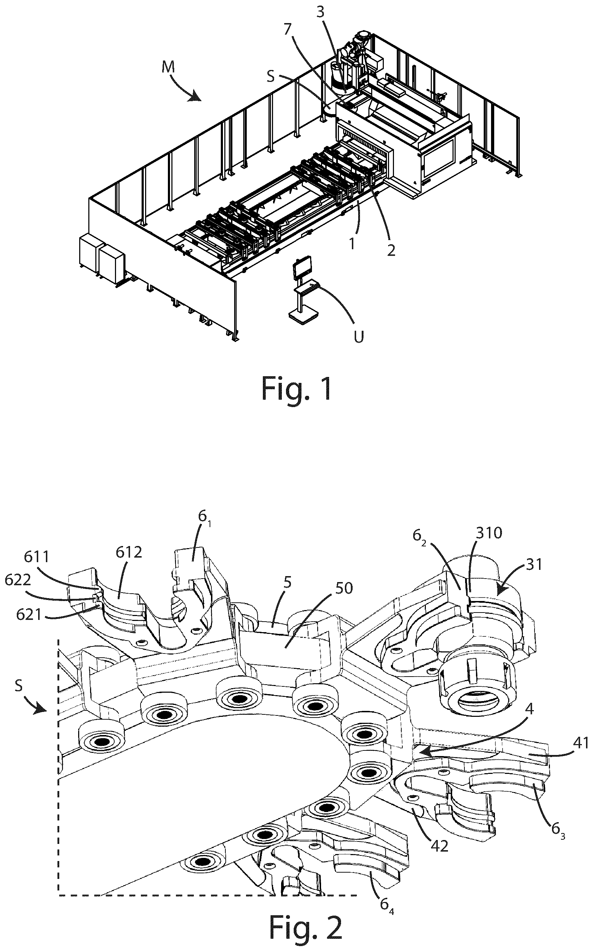

Referring to figure 1, it is shown a machine M for machining pieces made of wood, glass, fiberglass, ceramic, plastic, metal, or the like.

Said machine M usually comprises a base 1 to rest the machine M on the ground, in which said base 1 houses a working surface 2, on which to place the pieces P to be machined.

Said working surface 2 can be equipped with one or more means for moving the pieces, such as for example, a plurality of rollers, or a conveyor belt capable of moving the pieces to be machined or already machined.

The machine M also comprises a machining unit 3 arranged on said working surface 2 and equipped with a first tool 31 for machining the pieces P.

The machine M is equipped with a tool magazine, from which to take said first tool 31 to be coupled to the machining unit 3 before starting the machining of the pieces P, and to contain at least one second tool 32 (generally a plurality), in which said second tool 32 can be replaced with the first tool 31 to start a machining different from the previous one, or one that cannot be carried out using said first tool 31.

Some embodiments of the machine M, for example, "CNC" type milling machines and machining centers, provide for the presence of a magazine in which the tools are arranged in a circle, outside of a disk.

The machine M comprises a tool change unit S having a support frame 5, a closed guide 50 arranged on the perimeter of said support frame 5, at least one clamp 4 for gripping and releasing a tool 31, 32.

Said at least one gripping and releasing clamp 4 is slidably coupled to said closed guide 50.

Said at least one gripping and releasing clamp 4 comprises a gripping and releasing member 6, 6ᵢ which, when said at least one clamp 4 grips the tool 31, 32, said gripping and releasing member 6, 6ᵢ couples to a lateral surface of said tool 31, 32 by a form coupling.

In this way, the tool coupled to said gripping and releasing member 6, 6ᵢ arranges along a substantially vertical main axis Y, in which said gripping and releasing member 6, 6ᵢ has at least one profile or shaping to take the tool 31, 32 so as to limit its inclination with respect to said axis Y during the movement of said clamp 4 integral with said closed guide 50, along the perimeter of the frame 5.

According to some embodiments, said closed guide 50 is configured to rotate around the perimeter of the support frame 5 at high speeds so as to allow rapid tool change.

According to some embodiments, the unit S for tool change is autonomous, and programmed to work at a predetermined rotation speed, for example, greater than 10 m/min.

According to further embodiments, said predetermined rotation speed is between 15 m/min and 30 m/min, for example, equal to 20 m/min.

In a preferred embodiment said rotation speed reaches speeds equal to 30 m/min.

Furthermore, the tool change unit S can be used in connection with a disc switch, a chain changer, a plate changer, or with a changer of other shapes.

According to some embodiments, the tool change unit S provides a plurality of positions, for example 24 positions for the tool change and is capable of increasing the capacity of the unit S, for example to reach up to 48 tool change positions.

Further embodiments include a unit S capable of reaching a plurality of positions even higher than the previous ones to allocate a plurality of tools.

According to some embodiments, the change of the tool 31, 32 always takes place at the same point of the tool change unit S, for example at the machining unit 3.

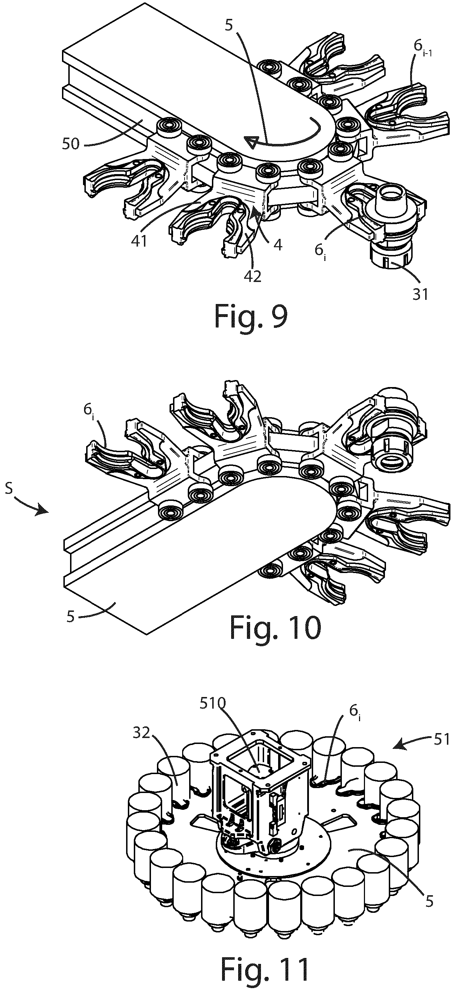

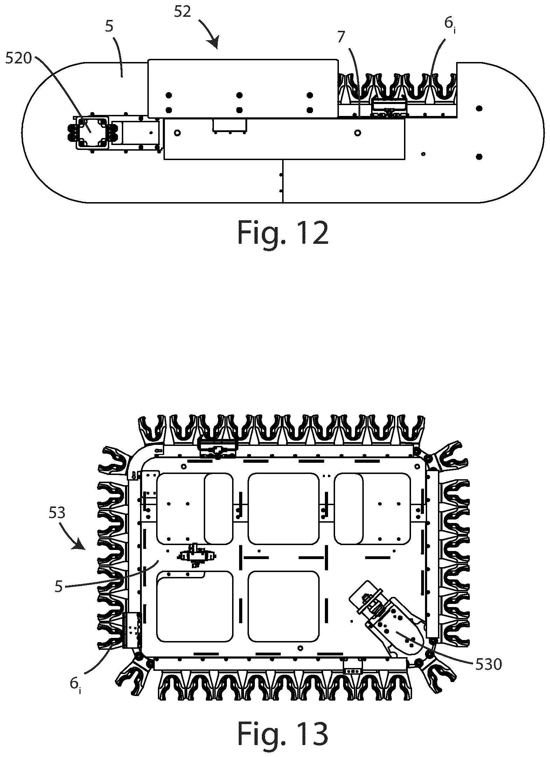

Said tool change can take place by releasing the tool to be used for machining the pieces using a rotating plate 51, an oval 52 or rectangular 53 chain, for example, shown respectively in figures 11-13, or other means capable of rotating the gripping and releasing members 6ᵢ.

Each of said rotating plate 51, an oval chain 52, or a rectangular chain 53 can include an actuator, 510, 520, and 530 respectively, for example a servomotor, to allow the rotation of the clamps 4 around the support frame 5 of the tool change unit S.

The rotation of the clamps by means of the closed guide 50 around the support frame 5, and of the gripping and releasing members 6ᵢ, for example, each contained in each clamp 4, which rotate integral with said closed guide 50, favors each tool to be transported, when required, to said tools change point.

Further, said gripping and releasing member 6, 6ᵢ can be configured to release, from said unit S, said first tool 31, when not in use, into said tool magazine.

Said first tool 31 is not in use and it may be convenient to replace it, for example, after having been used for a first machining of a piece P, at the end of a given machining or at the beginning of a new machining for which this first tool 31 cannot be used.

Furthermore, the gripping and releasing member may be able to release, from said tool change unit S, said at least one second tool 32, in correspondence with said machining unit 3 to machine said pieces P.

Again, with reference to figure 1, the machine M can be provided with a logic control unit U to manage the operation of the machine M.

In some embodiments, said logic control unit U is able to manage the tool change, regulating the rotation of the closed guide 50 around the perimeter of the support frame 5 of the unit S, and the selection of a specific gripping and releasing member 6ᵢ to allow the gripping or releasing of a tool.

As can be seen from figures 2, 9, and 10, said clamp 4 comprises a pair of jaws 41 and 42, in which said gripping and releasing member 6, 6ᵢ is placed between each jaw of said pair of jaws.

Advantageously, said gripping and releasing member 6, 6ᵢ deforms due to the elasticity of the material (as described below) with which the clamp 4 is made, and the fact that the jaws 41 and 42 partially interfere with the grip of the tool 31, 32.

In some alternative embodiments, the jaws are mobile members capable of gripping said gripping and releasing member 6, 6ᵢ, which therefore can deform due to the effect of said jaws to take or release said tool 31, 32. In fact, when the clamp 4 takes a tool, the jaws press on said gripping and releasing member 6, 6ᵢ which, in turn, increases the grip on the tool. However, when the clamp 4 releases the tool, the jaws open, reducing the pressure on the gripping member, which moves away from the tool until it is freed to release it.

As can be seen from figure 2, said gripping and releasing member 6, 6ᵢ has a main relief 611 (shown for member 6₁, but not shown for member 6₂, 6₃, and 6₄) for shape coupling with said lateral surface 310 of said tool 31, 32, and a shaping 621 intended to contact said lateral surface 310 when the clamp is coupled to the tool.

In the embodiment shown, the shaping 621 is given by one or more reinforcing reliefs, arranged on the profile of said gripping and releasing member 6, 6ᵢ in contact with the tool, to increase the contact area.

In this way, by increasing the contact area between the profile of the gripping and releasing member and the lateral surface 310 of the tool, it is guaranteed that the tool 31, 32 is arranged along a substantially vertical main axis Y.

Said unit S is preferably arranged in such a way that its support frame 5 extends along a substantially horizontal main axis. In this way the gripping and releasing member 6, 6ᵢ tends to grip a tool 31, 32 in such a position as to keep the tool arranged along a main axis substantially orthogonal to the main axis of the support frame 5, i.e. along the vertical direction Y.

According to some embodiments, the gripping and releasing member 6, 6ᵢ can comprise an upper lip, for example, corresponding with the main relief 611 to contact the upper part of said tool 31, 32, and a shaping 621 having a shape similar to a lip and arranged in correspondence with a central area of the tool to be picked up, for example between the upper part and the lower part of said tool 31, 32.

In this way, thanks to the presence of said main relief 611 and said shaping 621, similar to two lips, for example, upper and central respectively, the tool 31, 32 is kept along said vertical axis Y during the rotation of said clamp 4 around the support frame 5.

In fact, the presence of a double lip binds the tool 31 , 32 in at least two holding points and consequently prevents the lower part of the tool from deviating from the vertical axis Y that passes through the upper end of the tool bound to the first lip.

Furthermore, since the supporting surface of the electrospindle, or in general of the tool to be gripped and/or released, is located above the unit S, for example, above the gripping and releasing member 6, 6ᵢ, having the shaping 621 arranged below the main relief 611 reduces the size of the unit S and avoids unstable or inefficient solutions.

In preferred embodiments, the shaping 621 is arranged in a portion of said gripping and releasing member 6, 6ᵢ between the lower end and a portion equal to a third of the size of said gripping and releasing member 6, 6ᵢ near said lower end, and the main relief 611 is arranged in a portion of said gripping and releasing member 6, 6ᵢ between said third part and half the size of said gripping and releasing member 6, 6ᵢ.

In alternative embodiments, the main relief 611 can be arranged near the lower end of said gripping and releasing member 6, 6ᵢ, and the shaping 621 can be arranged in a portion of the member 6, 6ᵢ between the upper end and said main relief 611.

According to some embodiments, the gripping and releasing member 6ᵢ is able to connect to a tool holder, which in turn, connects to a tool required for machining pieces P.

According to some embodiments, the gripping and releasing member 6ᵢ is sized to connect to various types of tools.

In fact, the gripping and releasing member 6ᵢ, thanks to the fact that it comprises a plastic material capable of deforming itself, is able to modify its structure to accommodate a tool with a diameter greater than the nominal curvature radius of the gripping and releasing member 6ᵢ and constrain the tool 31, 32 in such a way that said tool 31, 32 rotates integral with the gripping and releasing member 6ᵢ.

Again with reference to figure 2, a preferred form of the tool change unit S comprises a plurality of gripping and releasing members 6ᵢ.

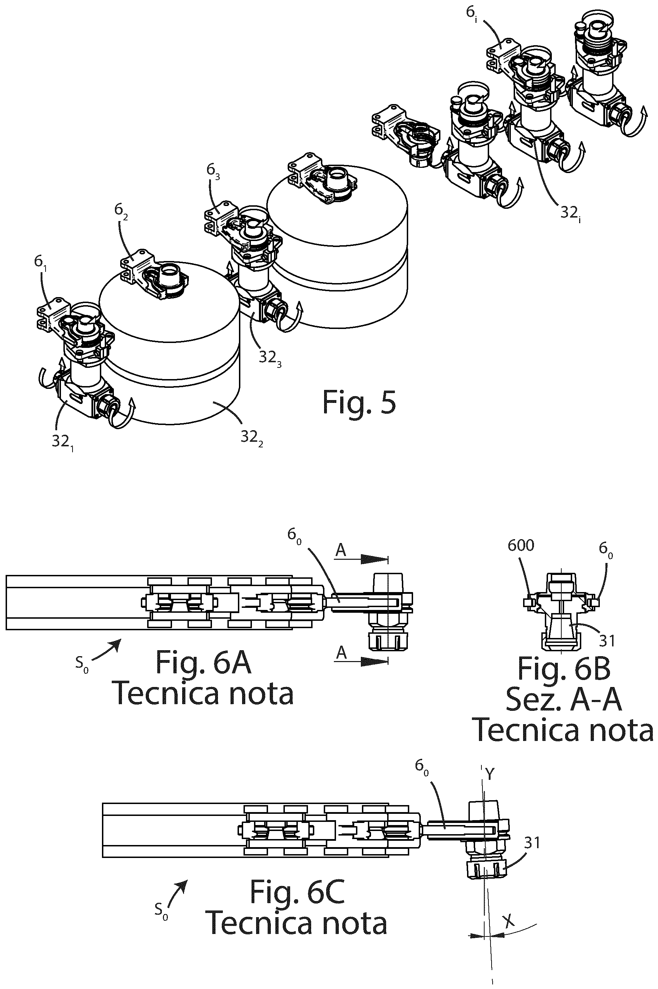

With reference to figure 5, a plurality of gripping and releasing members 6ᵢ, capable of adapting to tools or tool holders of various sizes and shapes, is shown. Therefore, the elastic component given by the plastic material gives flexibility to the tool change unit S.

Furthermore, according to some embodiments, in which the gripping and releasing member 6, 6ᵢ comprises a plastic material, said plastic material can be reinforced with fiberglass to guarantee resistance and durability to the gripping and releasing member 6, 6ᵢ.

In fact, reinforcing (doping) a plastic material with fiberglass has the advantage of maintaining the mechanical characteristics unchanged over time, so the functionality of the gripping and releasing member 6, 6ᵢ remains stable over time, or at least increases the durability of the member 6, 6ᵢ over time compared to a vehicle made exclusively of plastic material.

According to some embodiments, said unit S is capable of anchoring and releasing also tool holders having a star shape and/or facing outwards with respect to said unit S.

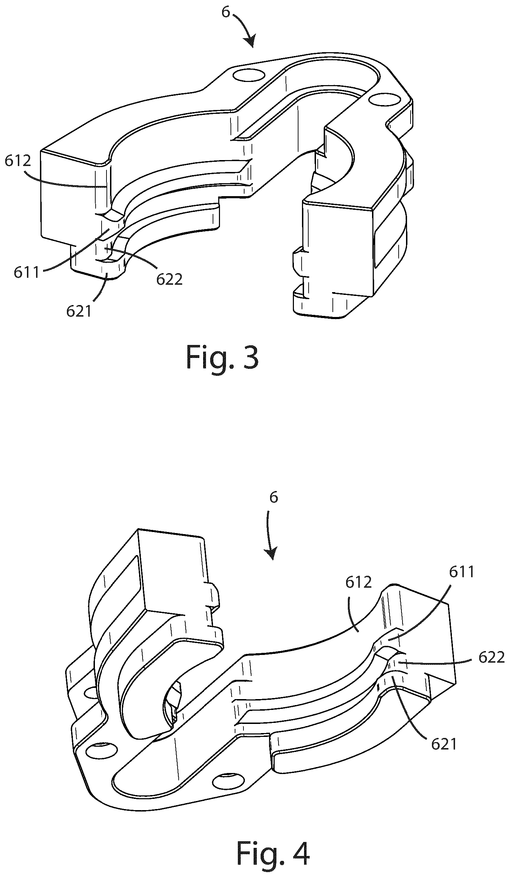

With reference to figures 2 and 3, said upper lip, as previously mentioned, essentially corresponds to a main relief 611 and said central lip is determined by the shaping 621.

The relative arrangement of said main relief 611 and said shaping 621 causes the formation of a first 612 and a second 622 cavity, which contact the lateral surface of the tool.

The first cavity 612 is arranged, for example, near an upper end of the gripping and releasing member 6 to house an upper portion of the tool and the first protrusion 611 is configured to constrain the tool in an upper portion thereof.

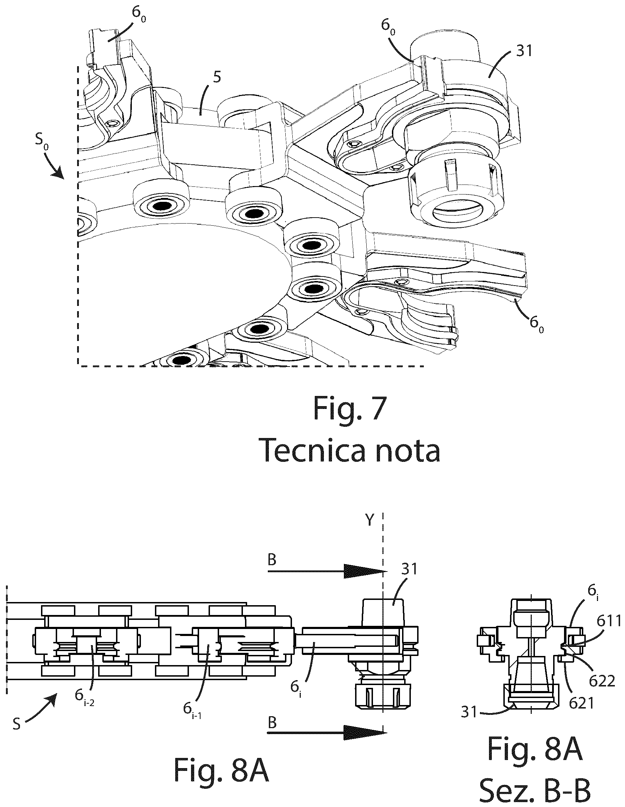

If the gripping means or member consisted exclusively of an upper edge, similarly to what happens with prior art devices, shown, for example in figures 6A-6C and in figure 7, the tool would tend to move from a position in which it is parallel to the vertical axis Y, for example, when a prior art tool change system is stationary or rotates at speeds lower than 10 m/min, to a position in which the lower end of the tool deviates from the vertical axis Y passing through the upper end creating the so-called "corkscrew effect".

To counteract this effect, i.e. to counteract the centrifugal force that tends to move the lower end of the tool away from its center of rotation while it rotates integral with the chain and/or the central body of a known tool change system to which it is anchored, it is necessary to maintain a reduced rotation speed, for example, less than 10 m/min. Maintaining a low rotation speed implies inefficient tool change and losses in terms of time and cost for machining pieces.

The gripping and releasing member of the example shown in figures 3 and 4 essentially comprises a shaping 621 (or equivalently two central lips) which stabilizes the tool 31, 32 during the rotation of the clamps around the frame 5. In fact, the second cavity 622, which is formed by the shaping 621 that protrudes from the lateral surface of the member 6, 6ᵢ, is arranged in an intermediate position between said main relief 611 and the shaping 621 itself, so as to house an intermediate portion of the tool 31 or 32, for example between the portion in which the tool is attached to the main relief 611 and the lower end of the tool.

In particular, said shaping 621 comprises two lips arranged so as to contact two diametrically opposite portions, or faces, of the lateral surface of the tool, so as to stabilize the grip of the tool 31, 32 itself.

Furthermore, said shaping 621 can comprise one or more reinforcement reliefs.

Where present, each reinforcement relief comprised in the shaping 621 provides a further constraint by which the tool is kept in an almost vertical position, as can be seen from figures 8A and 8B, even when the unit S rotates at a considerable speed.

According to some embodiments, not shown in the figures, the unit S includes a plurality of reinforcement reliefs 621. These reliefs can be arranged, for example, along a substantially horizontal direction, at a certain distance from the main relief 611.

This plurality of reinforcement reliefs is arranged along the surface of the gripping and releasing member 6, 6ᵢ in contact with the tool to provide multiple points of contact with the tool to be gripped and/or released.

In the present description, a considerable speed is to be intended as greater than 10 m/min, for example greater than 15 m/min.

The numerical reference 7 indicates a slot sized to house a tool to be picked up by means of said gripping and releasing member 6, 6ᵢ.

The embodiments in which the machine M is equipped with a slot 7 guarantee the correct selection of the tool 32 to be taken from the magazine thanks to the fact that the slot 7 determines an opening of the tool size and allows the tool change only if a tool is arranged in correspondence with the slot 7 itself.

According to some embodiments, said slot 7 is obtained on the perimeter of the support frame 5 of the unit S, so as to guarantee that the tool change always takes place in the same point, for example, in correspondence with the machining unit 3.

The operation of the machine M described above takes place as follows.

When the machine M is loaded with the pieces P to be machined, a machining of said pieces P is defined.

Each defined or selected machining is performed by a machining unit 3, capable of carrying out said machining.

In this regard, if the machining unit is not loaded with tool 31 or is loaded with a tool that is not suitable for the requested machining, the tool change unit S, with which the machine M is equipped, is activated, in order to provide the machining unit 3 with the tool corresponding to the requested machining.

At this point the tool change unit S, which is preferably arranged along a substantially horizontal main axis, rotates around an axis parallel to the vertical axis Y, for example, around the support frame 5 of the tool change unit S.

In particular, the tool change unit S rotates until the clamp 4 positions itself in correspondence with the machining unit 3 and takes the first tool 31.

The gripping or retrieval of the first tool 31 is ensured by the gripping and releasing member 6, 6ᵢ through a shape-fit coupling with the tool 31. At this point the tool change unit S rotates the clamp 4 including the gripping and releasing member 6, 6ᵢ along the closed guide 50 until the first tool 31 is positioned in correspondence with the tool magazine. At this point the gripping and releasing member 6, 6ᵢ releases the first tool 31 into the tool magazine.

Similarly, the tool change unit S, and in particular the gripping and releasing member 6, 6ᵢ grips, from the tool magazine, a second tool 32 to be used for further machining of the piece P.

Once said gripping and releasing member 6, 6ᵢ takes said second tool 32, the unit S, moved, for example rotates the clamps 4 (generally the plurality of clamps) integral with the closed guide 50 around the perimeter of the support frame 5 until the gripping and releasing member 6, 6ᵢ coupled to said second tool 32 is positioned in correspondence with the machining unit 3. At this point the tool change unit S releases the second tool 32 to allow the machining of the piece P using said second tool 32.

According to some preferred embodiments, the gripping and releasing member 6, 6ᵢ that picks up the first tool 31 from the machining unit 3 is different from the gripping and releasing member that picks up the second tool 32 to be released into the machining unit 3.

In a preferred embodiment the tool change unit S can pick up the first tool 31 from the machining unit 3 while picking up the second tool 32 from the tool magazine so as to minimize the rotation of the clamps around the support frame 5, and offer an efficient tool change process, for example, by carrying out the gripping and releasing of two tools in parallel, i.e. at the same time.

In order to provide an efficient machine M, i.e. to minimize the time spent for changing tools, the tool change unit S has a rotation speed substantially greater than the rotation speed commonly used by tool change equipped with clamps.

In fact, unlike known devices which are forced to limit their rotation speed, for example, up to a maximum of 10 m/min to safeguard the tools and the devices, in the present invention the presence of a tool change unit S equipped with gripping and releasing members 6ᵢ, as described above, allows to increase the rotation speed of the closed guide 50 to which the gripping and releasing clamps are coupled and therefore accelerate the tool changing process.

### Advantages

An advantage of the present invention is to provide a machine for machining pieces, equipped with a low cost machining tool replacement unit.

A further advantage of the present invention is to provide a machine for machining pieces and an associated tool change unit, which allows the rotation speed of the chain to be increased, protecting the tools from possible collisions.

Still an advantage is to provide gripping and releasing members capable of picking up the tools to be transported from the tool magazine to the working surface and vice versa, equipped with a plurality of contact points with the tool in such a way as to maintain a desired position of the tool when the latter is gripped, moved and/or released by the tool change unit.

A further advantage is to provide a machine and a tool change unit capable of reducing tool change time.

Another advantage is protecting tools, and in particular heavy tools, from falls due to loss of contact with the current clamps as the rotation speed of the chain increases.

Another advantage is to reinforce the gripping and releasing members to reduce their deterioration.

Furthermore, the gripping and releasing members described in the present invention can replace or coexist with current clamps within tool replacement systems.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for machining pieces (P), in particular pieces made of wood, glass, fibreglass, ceramic, plastic, metal, or the like, comprising
a machining unit (3) for machining a piece (P), using a first tool (31),
a tool magazine, for housing at least one second machining tool (32),
a tool change unit (S), for picking up and releasing said first (31) or second (32) tool for changing the tool of said machining unit (3), wherein said tool change unit (S) in turn comprises:
a support frame (5);
a closed guide (50) arranged on the perimeter of said support frame (5) with which it is slidably coupled;
at least one clamp (4) for gripping and releasing a tool (31, 32), coupled to said closed guide (50), wherein said at least one gripping and releasing clamp (4) comprises
a grasping and releasing member (6, 6ᵢ), wherein, when said at least one clamp (4) takes said first (31) or second (32) tool, said gripping and releasing member (6, 6ᵢ) couples with a lateral surface respectively of said first (31) or second (32) tool by means of shape coupling so that the tool coupled to said gripping and releasing member (6, 6ᵢ) is arranged along a substantially vertical main axis (Y),
wherein said machine is **characterized in that** said gripping and releasing member (6, 6ᵢ) has at least one shaping (621) to grip said first (31) or second (32) tool, so as to limit its inclination with respect to said axis (Y) during the movement of said clamp (4) along said closed guide (50).

2. Machine (M) according to the preceding claim, wherein said gripping and releasing member (6, 6ᵢ) comprises a main relief (611) for shape coupling with said lateral surface (310) of said tool (31, 32).

3. Machine (M) according to any one of the preceding claims, wherein said shaping comprises two lips capable of contacting said tool (31, 32).

4. Machine (M) according to any one of claims 1-2, wherein said shaping (621) comprises one or more reinforcing reliefs arranged on a lateral contact surface of said gripping and releasing member (6, 6ᵢ) to increase the area in contact with said tool (31, 32).

5. Machine (M) according to the preceding claim, wherein each reinforcing relief is arranged along a direction orthogonal to said vertical axis (Y) at a distance from said main relief (611), and wherein said distance from said main relief (611) is the same for each reinforcing relief.

6. Machine (M) according to any one of claims 4 or 5, wherein said main relief (611) and said one or more reinforcing reliefs form a first cavity (612) and a second cavity (622) to increase the area of contact with said lateral surface of said tool (31, 32) by shape coupling.

7. Machine (M) according to any one of the preceding claims, wherein said tool change unit (S) comprises a plurality of gripping and releasing members (6ᵢ).

8. Machine (M) according to any one of the preceding claims, wherein said closed guide (50) comprises a rotating plate (51), an oval chain (52), a rectangular chain (53), or a circular chain for rotating said at least one gripping and releasing clamp (4) around said support frame (5).

9. Tool change unit (S) for picking up and releasing tools for a machine (M) comprising a machining unit (3) for working, using a first tool (31), pieces (P) preferably made of in wood, glass, fiberglass, ceramic, plastic, metal, or the like, and a tool magazine for housing at least a second tool (32), wherein said tool change unit (S) for changing the tool of said machining unit (3) comprises:
a support frame (5);
a closed guide (50) arranged on the perimeter of said support frame (5), with which it is slidably coupled;
at least one clamp (4) for gripping and releasing a tool (31, 32),
coupled to said closed guide (50), wherein said at least one gripping and releasing clamp (4) comprises
a grasping and releasing member (6, 6ᵢ) wherein, when said at least one clamp (4) takes said first (31) or second (32) tool, said gripping and releasing member (6, 6ᵢ) couples with a lateral surface respectively of said first (31) or second (32) tool by shape coupling, so that the tool coupled to said gripping and releasing member (6, 6ᵢ) is arranged along a substantially vertical main axis (Y),
wherein said tool change unit (S) is **characterized in that** said gripping and releasing member (6, 6ᵢ) has at least one shaping (621) to grip said first (31) or second (32) tool, so as to limit its inclination with respect to said axis (Y) during the movement of said clamp (4) along said closed guide (50).

10. Tool change unit (S) according to the preceding claim, wherein said gripping and releasing member (6, 6ᵢ) comprises
a main relief (611) for shape coupling with said lateral surface (310) of said tool (31, 32).

11. Tool change unit (S) according to any one of claims 9-10, wherein said shaping (621) comprises two lips capable of contacting said tool (31, 32).

12. Tool change unit (S) according to any one of claims 9-11, wherein said shaping (621) comprises one or more reinforcing reliefs arranged on a lateral contact surface of said gripping and releasing member (6, 6ᵢ) to contact said tool (31, 32).

13. Unit (S) according to the preceding claim, wherein each reinforcing relief is arranged along a direction orthogonal to said vertical axis (Y) at a distance from said main relief (611), wherein said distance from said main relief (611) is the same for each reinforcing relief.

14. Tool change unit (S) according to any one of claims 9-13, wherein said closed guide (50) comprises a rotating plate (51), an oval chain (52), a rectangular chain (53), or a circular chain for rotating said at least one gripping and releasing clamp (4) around said support frame (5).

15. Tool change unit (S) according to any one of claims 9-14, comprising a plurality of gripping and releasing members (6i).
